# EUROPÄISCHE PATENTSCHRIFT

(11) **EP 3 612 740 B1**
(45) Veröffentlichungstag und Bekanntmachung des Hinweises auf die Patenterteilung: **14.10.2020**
(21) Anmeldenummer: 18719524.3
(22) Anmeldetag: 19.04.2018
(51) Int. Cl.: B62D 65/02, F16B 21/07, F16B 33/00, F16B 41/00, F16B 19/02, F16B 5/02

(54) **VERSTELLEINHEIT UND EINSTELLVERFAHREN FÜR EIN BAUTEIL**
ADJUSTMENT UNIT AND ADJUSTMENT METHOD FOR A COMPONENT
UNITÉ DE RÉGLAGE ET PROCÉDÉ DE RÉGLAGE D'UN COMPOSANT

(30) Priorität: 03.05.2017 DE 102017109501
(43) Veröffentlichungstag der Anmeldung: 26.02.2020
(73) Patentinhaber: Böllhoff Verbindungstechnik GmbH, 33649 Bielefeld (DE); Skoda Auto A.S., 293 01 Mladá Boleslav (CZ)
(72) Erfinder: HEINRICHS, Heinrich, 32602 Vlotho (DE); KAHRE, Michael, 32052 Herford (DE); STASTNY, Petr, 29306 Mlada Boleslav-Kosmonosy (CZ); STRÁNSKÝ, Jirí, 29501 Mnichovo Hradiste (CZ)
(74) Vertreter: HWP Intellectual Property
(86) Internationale Anmeldenummer: PCT/EP2018/060089
(87) Internationale Veröffentlichungsnummer: WO 2018/202434

(56) Entgegenhaltungen:
- DE-A1- 10 242 195
- JP-U- S60 145 613

## Beschreibung

### 1. Gebiet der Erfindung

Vorliegende Erfindung betrifft eine Verstelleinheit zum Einstellen einer Relativposition zwischen einem fest angeordneten ersten Bauteil und einem versetzbar gelagerten zweiten Bauteil, eine Verbindung zwischen diesen beiden Bauteilen mithilfe der Verstelleinheit und ein Einstellverfahren einer Relativposition der beiden Bauteile zueinander mithilfe der Verstelleinheit.

### 2. Hintergrund der Erfindung

Aus der EP 1626185 B1 ist eine Verstelleinheit basierend auf einer verstellbaren Schraubverbindung bekannt. Diese Verstelleinheit wird beispielsweise zum Befestigen einer Fahrzeug-Rückleuchte an einem Karosserieblech verwendet. Zwischen der Fahrzeugleuchte und anderen Karosserieteilen ist üblicherweise ein Spalt vorhanden, der aus ästhetischen Gründen möglichst klein gehalten werden soll. Die Verstellbarkeit der Verstelleinheit erlaubt es, den Abstand zwischen dem fest angeordneten Karosserieblech und der nachgiebig gelagerten Rückleuchte zu verstellen, um dadurch Schwankungen im Spaltmaß zwischen der Rückleuchte und den anderen Karosserieteilen auszugleichen.

Die bekannte Verstelleinheit besteht aus einer Einstellschraube mit Kopf, die in einem hülsenartigen Aufnahmeteil über eine Gewindepaarung gehalten wird. Während das hülsenartige Aufnahmeteil an der Karosserie eines Kraftfahrzeugs über eine Rastverbindung befestigt wird, ist mithilfe der Gewindepaarung ein axialer Versatz zwischen dem Kopf der Einstellschraube und dem hülsenartigen Aufnahmeteil einstellbar. Da der Kopf der Einstellschraube als Anlagefläche für das nachgiebig gelagerte zweite Bauteil dient, wird über die axiale Verstellung der Einstellschraube die Relativposition zwischen dem ersten und dem zweiten Bauteil verändert. Um die Einstellschraube zu drehen, ist diese an beiden Enden mit einem Antriebsmerkmal versehen. Entsprechend kann die Einstellschraube von außen oder aus dem Inneren der Karosserie gedreht werden.

Eine weitere Einstellmöglichkeit ist in DE 10 2015 010 561 A1 beschrieben. Um die Relativposition des ersten Bauteils im Verhältnis zum zweiten Bauteil einstellen zu können, werden zunächst zwei Befestigungselemente verwendet, die in getrennten Öffnungen des zweiten Bauteils angeordnet sind. Während das erste Befestigungselement im Wesentlichen eine Relativposition zwischen dem ersten und zweiten Bauteil sichert, kann mit dem zweiten Befestigungselement eine seitliche Verstellung der Relativposition zwischen den beiden Bauteilen vorgenommen werden. Zu diesem Zweck weist das zweite Befestigungselement ein abstützendes Exzenter-Element auf, das sich an Anschlägen des zweiten Bauteils abstützt. Durch Drehen des Exzenter-Elements um seine Längsachse wird das zweite Bauteil in radialer Richtung bezogen auf das Exzenter-Element ausgelenkt. Auf diese Weise wird eine Relativposition zwischen den beiden Bauteilen eingestellt.

Ein weiteres Verstellelement zum Justieren einer Türinnenverkleidung an einem Kraftfahrzeug beschreibt DE 10 2014 014 541 A1. Dieses Verstellelement verfügt über ein einseitig angeordnetes Antriebsmittel und einen Exzenter-Abschnitt. Durch Drehen des Verstellelements über das Antriebsmittel greift der Exzenter-Abschnitt an entsprechend angrenzend angeordneten Anschlägen eines Bauteils an, um dieses in radialer Richtung bezogen auf das Verstellelement zu versetzen.

Eine mit einem Exzenter ausgestattete, insbesondere zur Sturz- oder Spureinstellung eines Kraftfahrzeuges bestimmte Einstellschraube mit einem Gewindeabschnitt ist in DE 102 42 195 A1 beschrieben. An dem Gewindeabschnitt ist eine zur formschlüssigen Aufnahme eines Werkzeugs ausgeführte Ausformung, beispielsweise eine Innensechskantaufnahme, angeordnet. Hierdurch kann die Drehbewegung der Einstellschraube und einer die Einstellschraube fixierenden Mutter von derselben Seite eines Halteelementes erfolgen. Ein hierzu bestimmtes Werkzeug mit zwei relativ zueinander drehbeweglichen Funktionselementen ermöglicht die zeitgleiche Betätigung der Ausformung sowie der Mutter.

Im Hinblick auf bekannte Verstelleinheiten hat sich als Nachteil gezeigt, dass diese unterschiedlich starke Querkräfte je nach Verstellposition nicht ausreichend berücksichtigen. Dies führt dazu, dass Haltekräfte der Verstelleinheit den Belastungen nicht standhalten, so dass ein Nachgeben der Verstelleinheit die gewünschte Bauteilposition verändert. Des Weiteren hat sich gezeigt, dass bekannte Verstelleinheiten aufwändig fixiert sein müssen, um ihre Position zu halten. Entsprechend ist vor jedem Verstellvorgang des Verstellelements zunächst ein Lösen aus ihrer Fixierung erforderlich. Dies erfordert aufgrund der zusätzlichen Arbeitsgänge weitere Zeit bei Verstellen oder Einstellen eines Verstellelements.

Im Hinblick auf die Vielzahl bekannter Verstelleinheiten und Verstellelemente ist es die Aufgabe vorliegender Erfindung, eine alternative Verstelleinheit bereitzustellen, die neben einem verlässlichen Sitz in einem fest angeordneten Bauteil auch eine genaue und effiziente Verstellmöglichkeit für ein bewegbar angeordnetes zweites Bauteil sowie eine verlässliche Sicherung der eingestellten Bauteilposition bereitstellt.

### 3. Zusammenfassung der Erfindung

Die obige Aufgabe wird durch eine Verstelleinheit gemäß dem unabhängigen Patentanspruch 1 gelöst. Des Weiteren offenbart vorliegende Erfindung eine verstellbare Verbindung zwischen einem ersten Bauteil und einem zweiten Bauteil mithilfe der genannten Verstelleinheit gemäß dem unabhängigen Patentanspruch 12 und des Weiteren ein Einstellverfahren einer Relativposition zwischen den beiden genannten Bauteilen mithilfe der Verstelleinheit gemäß Patentanspruch 13, die ebenfalls die obige Aufgabe lösen. Vorteilhafte Ausgestaltungen und Weiterentwicklungen vorliegender Erfindung gehen aus der folgenden Beschreibung, den begleitenden Zeichnungen und den anhängenden Ansprüchen hervor.

Die erfindungsgemäße Verstelleinheit dient dem Einstellen einer Relativposition zwischen einem fest angeordneten ersten Bauteil und einem versetzbar gelagerten zweiten Bauteil. Diese Verstelleinheit weist die folgenden Merkmale auf: einen Verstellbolzen mit einem Exzenterkopf, einen Schaft, und mindestens ein Antriebsmittel, vorzugsweise zwei endseitig angeordnete Antriebsmittel. Des Weiteren umfasst die Verstelleinheit ein hülsenartiges Aufnahmeteil, in dem der zylindrische Schaft des Verstellbolzens aufnehmbar, über eine Reibschlussverbindung zwischen dem Schaft und dem Aufnahmeteil haltbar und mit dem profilierten Verbindungsabschnitt relativ zum hülsenartigen Aufnahmeteil in einer Drehwinkelorientierung verstellbar ist, wobei der Exzenterkopf eine umlaufende radiale Anlagefläche bereitstellt, an der das zweite Bauteil abstützbar ist, sodass eine laterale Position des zweiten Bauteils relativ zum ersten Bauteil durch Drehen des Verstellbolzens über eines der Antriebsmittel einstellbar ist.

Aufgrund der vorteilhaften Verwendung eines Verstellbolzens, der zwei endseitige Antriebsmittel aufweist, ist die erfindungsgemäß bevorzugte Verstelleinheit flexibel in Kombination mit teilweise offenen oder geschlossenen zu befestigenden Bauteilen einsetzbar. Während ein offenes bzw. teilweise offenes Bauteil eine permanente Zugänglichkeit zum kopfnah angeordneten Antriebsmittel des Verstellbolzens ermöglicht, ist dies bei einem geschlossenen Bauteil, wie beispielsweise einer Heckleuchte eines Kraftfahrzeugs, nicht mehr möglich. In diesem Fall wird die effektive Verstellung der Verstelleinheit mithilfe eines zweiten Antriebsmittels gewährleistet, welches beispielsweise in den Innenraum einer Karosserie eines Kraftfahrzeugs hinein ragt. In gleicher Weise ist es bevorzugt, den Verstellbolzen mit nur einem Antriebsmittel zu verstellen. Dieses Antriebsmittel wird gemäß einer Ausführungsform durch eine zentrale Durchgangsöffnung im Verstellbolzen, bspw. mit polygonalem Querschnitt, bereitgestellt. In die Durchgangsöffnung ist von beiden Enden des Verstellbolzens eingreifbar und stellt über einen Formschluss eine drehfeste Verbindung mit einem Werkzeug, bsp. ein Inbussschlüssel, her. Der Formschluss kann endseitig, mittig oder über die gesamte Länge der Durchgangsöffnung erfolgen.

Des Weiteren basiert die Einstellung der Relativposition zwischen dem ersten und dem zweiten Bauteil auf einer Veränderung der Relativposition zwischen dem hülsenartigen Aufnahmeteil und dem Verstellbolzen. Da diese über eine drehend veränderbare Reibschlussverbindung miteinander verbunden sind, stellt die bevorzugte Verstelleinheit eine hohe Flexibilität bei den einzustellenden Abständen sowie in der Ausrichtung auf bestimmte Angriffsbereiche des zu verstellenden Bauteils bereit. Während nämlich eine bekannte Gewindepaarung zwischen einer Verstellschraube und einem hülsenartigen Aufnahmeteil nur einen axialen Versatz entsprechend der Gewindesteigung zur Verfügung stellt, ist mithilfe der bereitgestellten Reibschlussverbindung eine beliebige Drehwinkelorientierung zwischen dem hülsenartigen Aufnahmeteil und dem Verstellbolzen realisierbar. In diesem Zusammenhang wird die laterale Ausrichtung beziehungsweise die radiale Ausrichtung des versetzbaren Bauteils mithilfe des Exzenterkopfes des Verstellbolzens ermöglicht.

Gemäß einer bevorzugten Ausführungsform vorliegender Erfindung umfasst das hülsenartige Aufnahmeteil einen federnden Ringflansch, über den das Aufnahmeteil mithilfe einer Mehrzahl von Federschenkeln in einer Öffnung des ersten Bauteils befestigbar ist. Aufgrund seiner Konfiguration erzeugt der federnde Ringflansch eine mechanische Vorspannung in axialer Richtung in Kombination mit dem fest angeordneten Bauteil, sodass sich das hülsenartige Aufnahmeteil verlässlich in einer Bauteilöffnung mithilfe der Federschenkel verrasten kann.

Diese federnde Konfiguration des Ringflansches gewährleistet ebenfalls die Ausgleichsmöglichkeit von Dickentoleranzen des fest angeordneten Bauteils. Des Weiteren ist bevorzugt dieser Ringflansch in seiner radialen Ausdehnung derart konfiguriert, dass er mit einem Dichtring oder einer ähnlich geformten Dichtung kombiniert werden kann. Positioniert man diese Dichtung zwischen dem Ringflansch und dem fest angeordnetem Bauteil, wird die Dichtung durch die Installation des hülsenartigen Aufnahmeteils in der Bauteilöffnung komprimiert und trägt damit zur Abdichtung der Bauteilöffnung bei.

Gemäß einer weiteren bevorzugten Ausfiihrungsform vorliegender Erfindung weist der Exzenterkopf des Verstellbolzens eine runde Form mit einem exzentrischen Drehpunkt oder die Form eines Gleichdicks, vorzugsweise herzähnlicher Form, auf.

Weiterhin bevorzugt umfasst der die reibschlüssige Verbindung herstellende Verbindungsabschnitt des Verstellbolzens eine profilierte Oberfläche mit einer Mehrzahl von Längsrippen als Verzahnung, einer Rändelung oder einer genoppten Oberfläche. Diese unterschiedlichen geometrischen Gestaltungsmöglichkeiten des profilierten Verbindungsabschnitts wirken mit der radialen Innenseite des hülsenartigen Aufnahmeteils reibschlüssig zusammen. Je nach bevorzugter Oberflächengestaltung der Innenseite des hülsenartigen Aufnahmeteils gewährleistet die Rändelung des Verbindungsabschnitts eine stufenlose Einstellung der Relativposition zwischen Verstellbolzen und hülsenartigem Aufnahmeteil. Weist die Innenwand des hülsenartigen Aufnahmeteils beispielsweise Noppen oder axial verlaufende radiale Vorsprünge auf, dann gewährleistet die Mehrzahl von Längsrippen oder auch die genoppte Oberfläche des profilierten Verbindungsabschnitts eine abgestufte Verstellmöglichkeit des Verstellbolzens in Bezug auf das Aufnahmeteil, insbesondere eine abgestufte Einstellung der Drehwinkelorientierung des Verstellbolzens in Bezug auf das Aufnahmeteil. Denn sowohl die Mehrzahl von Längsrippen wie auch die genannte genoppte Oberfläche wirkt bevorzugt wie eine Verzahnung in Kombination mit den axial verlaufenden radialen Vorsprüngen an der Innenwand des Aufnahmeteils.

Gemäß einer weiteren bevorzugten Ausführungsform vorliegender Erfindung weist der zylindrische Schaft des Verstellbolzens benachbart zum Exzenterkopf mindestens eine umlaufende Dichtlippe auf, die abdichtend und/oder drehungshemmend mit einem Axialkragen des Aufnahmeteils zusammenwirkt. Dazu stützt sich die in ihrer Konstruktion bevorzugt flexibel konfigurierte Dichtlippe in radialer Richtung an der Innenseite des Axialkragens des Aufnahmeteils ab, sodass zunächst eine Reibschlussverbindung erzielt wird. Zudem bringt eine ausreichende Verformung der Dichtlippe im Presssitz mit dem Axialkragen eine ausreichende Abdichtung zwischen dem Verstellbolzen und dem hülsenartigen Aufnahmeteil mit sich.

Gemäß einer weiteren bevorzugten Ausführungsform der erfindungsgemäßen Verstelleinheit besitzt das hülsenartige Aufnahmeteil einen zylindrischen Axialabschnitt mit einer Durchgangsbohrung, die mit Querschnitt des Axialabschnitts einen unrunden Freiraum bereitstellt, in dem der Verbindungsabschnitt des Verstellbolzens reibschlüssig aufnehmbar ist.

Gemäß einer weiteren bevorzugten Ausführungsform der erfindungsgemäßen Verstelleinheit wird der unrunde Freiraum durch im Querschnitt betrachtet teilweise umlaufende innere Bogensegmente, durch einen elliptischen Querschnittsverlauf der Innenwand des Axialabschnitts oder durch eine profilierte Oberflächengestaltung der Innenwand des Axialabschnitts gebildet.

Üblicherweise werden Reibschlussverbindungen zwischen einem runden Querschnitt eines Verstellbolzens und einem runden Freiraum einer hülsenartigen Aufnahme realisiert. In diesem Fall ist ohne eine passende Oberflächengestaltung aber die Reibschlussverbindung allein abhängig von den Materialeigenschaften von Verstellbolzen und Aufnahmeteil. Um diese Beschränkung auf Materialeigenschaften zu erweitern und damit den Gestaltungsspielraum der reibschlüssigen Verbindung zwischen Verstellbolzen und Aufnahmeteil umfangreicher zu gestalten, wurde der durch den Querschnitt der Durchgangsbohrung definierte Freiraum für den Verbindungsabschnitt des Schafts unrund gestaltet. Ein derart unrunder Freiraum weist beispielsweise einen elliptischen Querschnitt oder einen in Umfangsrichtung segmentweise radial verjüngten Querschnitt oder radial einwärts ragende axial verlaufende Stege oder andere Strukturen auf. Dadurch wird von vornherein ein unrunder Querschnittsverlauf, hier bevorzugt ein elliptischer oder ein polygonaler, definiert. Alternativ dazu wird ein runder Querschnittverlauf der Innenwand des hülsenartigen Aufnahmeteils gezielt gestört, so dass ein unrunder Freiraum im Inneren des zylindrischen Axialabschnitts vorliegt. Mit Blick auf die Reibschlussverbindung zwischen Verstellbolzen und hülsenartigem Aufnahmeteil erzeugen gerade die elliptische oder polygonale Form oder die den Freiraum reduzierenden Strukturen die Möglichkeit, dass neben einer aufgrund der Materialeigenschaften vorhandenen Verformung auch eine konstruktive Verformung des hülsenartigen Aufnahmeteils über das Eindringen des Verstellbolzens in den Freiraum realisierbar ist. Dies setzt zusätzliche Kräfte zwischen dem Verstellbolzen und dem hülsenartigen Aufnahmeteil frei, die zur Gestaltung der reibschlüssigen Verbindung verwendet werden können. Zudem eröffnen die Formgestaltungen die Möglichkeit, dass in bestimmte Drehwinkeleinstellungen des Verstellbolzens im Vergleich zum Aufnahmeteil unterschiedlich große Reibschlusskräfte erzielt werden.

Gemäß einer weiteren bevorzugten Ausführungsform vorliegender Erfindung weist der Axialabschnitt an einer radialen Innenseite eine Mehrzahl von Axialrippen auf, die Raststellen mit dem profilierten Verbindungsabschnitt des Verstellbolzens bilden.

Wie oben bereits erwähnt worden ist, stellt eine bevorzugte Mehrzahl von Axialrippen, die an der radialen Außenseite des Verstellbolzens vorgesehen ist, eine Verzahnung bereit, die in entsprechende Axialrippen bzw. deren Zwischenräume im Axialabschnitt des hülsenartigen Aufnahmeteils eingreift. Dieser stufenweise verstellbare Eingriff, der einer verstellbaren Verzahnung gleichkommt, gewährleistet eine stufenweise Änderung der Drehwinkelorientierung des Verstellbolzens in Bezug auf das hülsenartige Aufnahmeteil. Zudem gewährleistet eine derartige Verzahnung eine Rückdrehsicherung, die für einen verlässlichen Bauteilsitz vorteilhaft ist. Des Weiteren ist es bevorzugt, mithilfe einer derartigen Verzahnung eine Schwingungsbelastung der Verstelleinheit zu ermöglichen, da diese Schwingungen nicht zu einem Versatz im Verzahnungseingriff zwischen Verstellbolzen und hülsenartigem Aufnahmeteil führen können.

Gemäß einer weiteren bevorzugten Ausführungsform vorliegender Erfindung weist das hülsenartige Aufnahmeteil an einer radialen Außenseite einen Markierungsvorsprung auf, der in Kombination mit einer passenden Aufnahme angrenzend an eine Installationsöffnung des ersten Bauteils eine ausgerichtete Installation des hülsenartigen Aufnahmeteils im ersten Bauteil gewährleistet. Ähnlich einer bekannten Nutund Federverbindung wird eine gewünschte Orientierung zwischen dem hülsenartigen Aufnahmeteil und dem ersten Bauteil gewährleistet. Dies stellt sicher, dass klare Bezugspunkte zwischen dem hülsenartigen Aufnahmeteil und dem darin zu befestigenden Verstellbolzen eingehalten werden können. Eine derartige bekannte Orientierung erleichtert eine spätere Justierung bzw. Einstellung von Positionen des zweiten Bauteils gerade in Bezug auf die Position des ersten Bauteils.

Des Weiteren offenbart vorliegende Erfindung eine verstellbare Verbindung zwischen dem ersten und dem zweiten Bauteil mithilfe der oben beschriebenen unterschiedlichen bevorzugten Ausführungsformen der erfindungsgemäßen Verstelleinheit.

Vorliegende Erfindung offenbart des Weiteren ein Einstellverfahren einer Relativposition eines versetzbar gelagerten zweiten Bauteils in Bezug auf ein fest angeordnetes erstes Bauteil, in dem eine Installationsöffnung für eine Verstelleinheit gemäß einer der oben beschriebenen Ausführungsformen vorgesehen ist. Dieses Einstellverfahren weist die folgenden Schritte auf: Befestigen des hülsenartigen Aufnahmeteils und des Verstellbolzens in der Installationsöffnung, wobei das Aufnahmeteil und der Verstellbolzen vormontiert oder nacheinander in die Installationsöffnung eingesetzt werden, Einstellen einer Grundeinstellung des Exzenterkopfes in Bezug auf das Aufnahmeteil, Anordnen des zweiten Bauteils mit einer Verstellrippe angrenzend an den Exzenterkopf und Drehen des Exzenterkopfes über eines der zwei Antriebsmittel und dadurch laterales Versetzen des zweiten Bauteils bezogen auf das erste Bauteil.

Während die Erfindung gemäß bevorzugter Verstelleinheit die vorteilhafte Reibschlussverbindung zwischen dem Verstellbolzen und dem hülsenartigen Aufnahmeteil bereitstellt, wird ebenfalls das vorliegende Einstellverfahren vorteilhaft durch das mindestens eine Antriebsmittel, vorzugsweise die zwei oben beschriebenen, zur Verfügung stehenden Antriebsmittel an den beiden Enden, des Verstellbolzens positiv beeinflusst. Denn die sich daraus ergebende Flexibilität ermöglicht je nach Konfiguration des auszurichtenden Bauteils eine Verstellmöglichkeit an dem jeweils zugänglichen axialen Ende des Verstellbolzens. Denn über die Drehung um die Längsachse des Verstellbolzens wird der Exzenterkopf verdreht, wodurch der Exzenterkopf radial anliegende Anschlagflächen des versetzbaren Bauteils in radialer Richtung versetzt. Diese Flexibilität ist gleichermaßen mit der formschlüssigen Durchgangsöffnung (siehe oben) wie mit zwei separat endseitig angeordneten Antriebsmitteln realisierbar.

Im Rahmen des erfindungsgemäß bevorzugten Einstellverfahrens ist es ebenfalls bevorzugt, den Verstellbolzen im hülsenartigen Aufnahmeteil zu verrasten, sodass dieser verliersicher und drehbar im hülsenartigen Aufnahmeteil gehalten ist. Diese formschlüssige Verbindung zwischen hülsenartigem Aufnahmeteil und Verstellbolzen gewährleistet, dass die Verstelleinheit auch in einem vormontierten Zustand, also der Verstellbolzen ist bereits in dem Aufnahmeteil eingesetzt, in der Installationsöffnung des feststehenden Bauteils installierbar ist. Selbst wenn die Installation des Verstellbolzens erst im Nachhinein in dem Aufnahmeteil erfolgt, ist über die Nutzung der Verstelleinheit sichergestellt, dass der Verstellbolzen nicht ungewollt in axialer Richtung aus dem Aufnahmeteil gelöst werden kann.

Gemäß einer weiteren bevorzugten Ausgestaltung des Einstellverfahrens weist dieses die folgenden Schritte auf: reibschlüssiges Halten des Verbindungsabschnitts im unrunden oder radial verjüngten Freiraum des zylindrischen Axialabschnitts des Aufnahmeteils und stufenloses oder abgestuftes Drehen des Verstellbolzens bei konstanter Axialposition im Aufnahmeteil. In diesem Zusammenhang ist es ebenfalls bevorzugt, dass der Verbindungsabschnitt einen elliptischen Querschnitt aufweist und in einem Freiraum mit rundem Querschnitt reibschlüssig verstellt wird. Zudem ist es bevorzugt, dass der Verstellbolzen innerhalb des hülsenartigen Aufnahmeteils mithilfe des kopfabgewandten Antriebsmittels gedreht wird, nachdem das zweite Bauteil mit einer Verstellrippe angrenzend an den Exzenterkopf angeordnet worden ist.

### 4. Kurze Beschreibung der begleitenden Zeichnungen

Die vorliegende Erfindung wird unter Bezugnahme auf die begleitende Zeichnung näher erläutert. Es zeigen:
- Figur 1: eine bevorzugte Ausführungsform der Verbindung eines ersten und eines zweiten Bauteils mithilfe der Verstelleinheit,
- Figur 2: eine Seitenansicht der Verbindung aus Figur 1,
- Figur 3: eine Seitenansicht einer bevorzugten Ausführungsform der erfindungsgemäßen Verstelleinheit,
- Figur 4: die Ansicht einer anderen Seite der Verstelleinheit aus Figur 3,
- Figur 5: eine perspektivische Ansicht der Verstelleinheit aus Figur 3,
- Figur 6: eine weitere perspektivische Ansicht der Verstelleinheit aus Figur 3,
- Figur 7: eine Seitenansicht einer bevorzugten Ausführungsform des Verstellbolzens der Verstelleinheit aus Figur 3,
- Figur 8: eine Draufsicht auf eine erste Ausführungsform des Exzenterkopfes des Verstellbolzens aus Figur 7,
- Figur 9: eine weitere bevorzugte Ausführungsform des Exzenterkopfes des Verstellbolzens aus Figur 7 in einer Draufsicht,
- Figur 10: eine weitere bevorzugte Ausführungsform des Exzenterkopfes des Verstellbolzens aus Figur 7,
- Figur 11: eine schematische Darstellung einer bevorzugten Zusammenwirkung des Exzenterkopfes und der Verstellrippe des zweiten Bauteils,
- Figur 12: eine Explosionsdarstellung der Verstelleinheit aus Figur 3,
- Figur 13: eine Seitenansicht einer bevorzugten Ausführungsform des hülsenförmigen Aufnahmeteils der Einstelleinheit gemäß Figur 3,
- Figur 14: eine seitliche Schnittdarstellung einer bevorzugten Ausführungsform des hülsenförmigen Aufnahmeteils der Verstelleinheit aus Figur 3,
- Figur 15: eine bevorzugte Ausführungsform einer Installationsöffnung im ersten Bauteil zur Befestigung des hülsenförmigen Aufnahmcteils,
- Figur 16: eine Ansicht einer bevorzugten Ausführungsform des hülsenartigen Aufnahmeteils in axialer Richtung entgegen einer Einsetzrichtung des Verstellbolzens,
- Figur 17: eine Darstellung einer bevorzugten Ausführungsform des Querschnitts des Verbindungsabschnitts des Verstellbolzens,
- Figur 18: eine bevorzugte Ausführungsform eines Querschnitts der Verbindungshülse des hülsenförmigen Aufnahmeteils,
- Figur 19: eine bevorzugte Querschnittsgestaltung des hülsenförmigen Aufnahmeteils,
- Figur 20: eine weitere bevorzugte Querschnittsgestaltung des hülsenförmigen Aufnahmeteils und

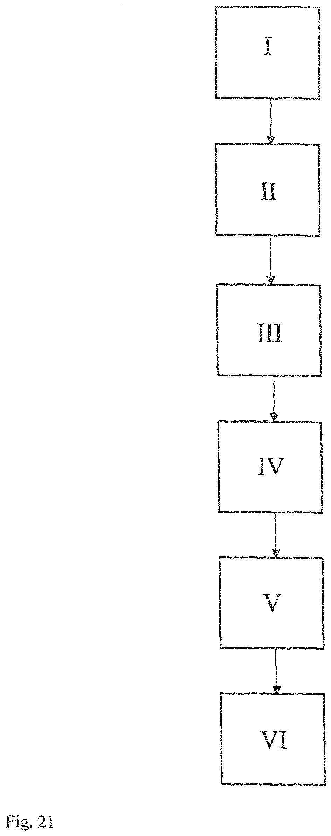

- Figur 21: ein Flussdiagramm einer bevorzugten Ausführungsform eines Installationsverfahrens der Verstelleinheit.

### 5. Detaillierte Beschreibung der bevorzugten Ausführungsformen

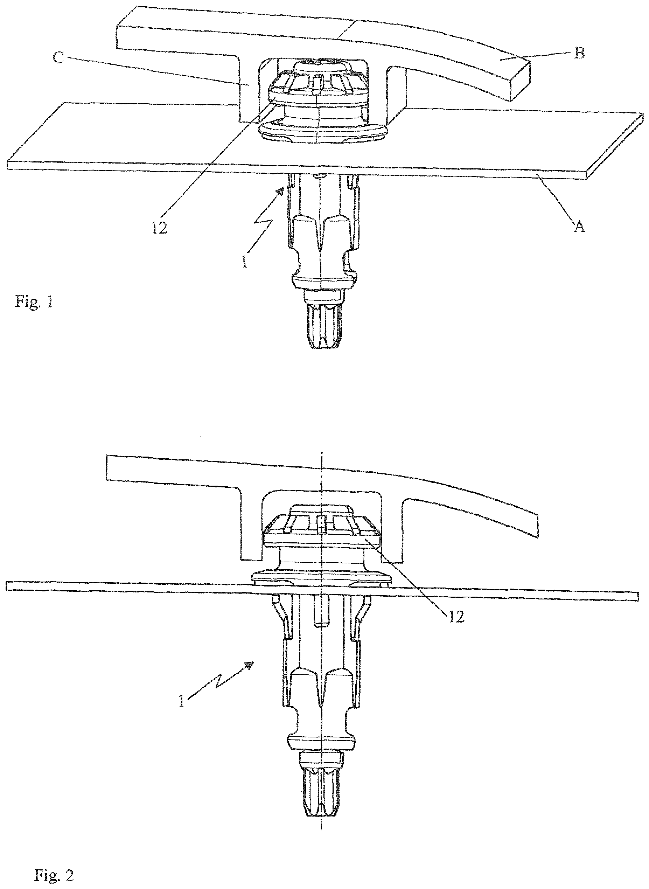

Die Figuren 1 und 2 zeigen die erfindungsgemäße Verstelleinheit 1 in einer bevorzugten Ausführungsform. Die Verstelleinheit 1 ist in einer Öffnung D eines feststehenden Bauteils A, beispielsweise eine Fahrzeugkarosserie, befestigt. Dazu besteht die Verstelleinheit 1 aus einem Verstellbolzen 3, der in einem hülsenartigen Aufnahmeteil 5 drehbar angeordnet ist. Das hülsenartige Aufnahmeteil 5 ist derart angepasst, dass es in der Installationsöffnung D des fest angeordneten zweiten Bauteils B verrastbar ist.

Der Verstellbolzen 3, der unten näher erläutert ist, umfasst einen Exzenterkopf 10. Der Exzenterkopf 10 ist mit seiner radialen Umfangsfläche 12 zumindest benachbart zu oder angrenzend an mindestens eine Verstellrippe C eines zweiten Bauteils B angeordnet (siehe Figuren 1, 2, 11). Das zweite Bauteil B ist versetzbar gelagert, wie beispielsweise eine Heckleuchte eines Kraftfahrzeugs oder andere Anbauteile im Kraftfahrzeug. Die versetzbare Lagerung des zweiten Bauteils B eröffnet die Möglichkeit, ein vorhandenes Spaltmaß zu benachbarten Teilen auf eine gewünschte Größe einzustellen. Zu diesem Zweck ist der Exzenterkopf 10 über den Verstellbolzen 3 drehbar angeordnet. Entsprechend greift die radiale Umfangsfläche 12 während der Drehung des Verstellbolzens 3 an der Verstellrippe C an und versetzt dadurch das zweite Bauteil B in gewünschtem Maß. Um das zweite Bauteil B in zumindest zwei Richtungen versetzen zu können, sind zwei einander gegenüberliegend angeordnete Versetzungsrippen C vorgesehen.

Die Verstelleinheit 1 sollte vormontierbar, selbsthemmcnd und fluiddicht sein, damit Fluide, wie Wasser, Öl- und Benzindämpfe etc., aus der Umgebung nicht in den Zwischenraum zwischen den Bauteilen A und B gelangen können.

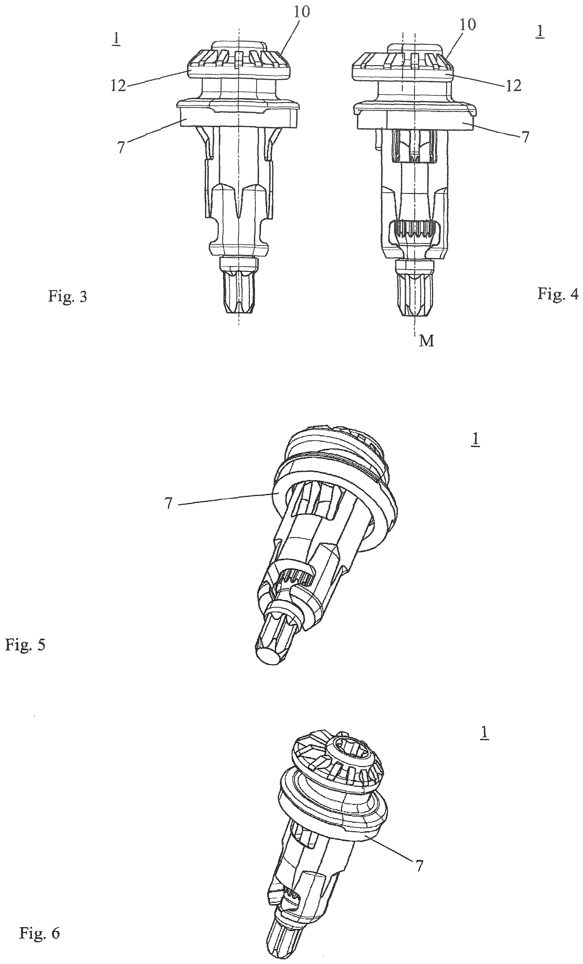

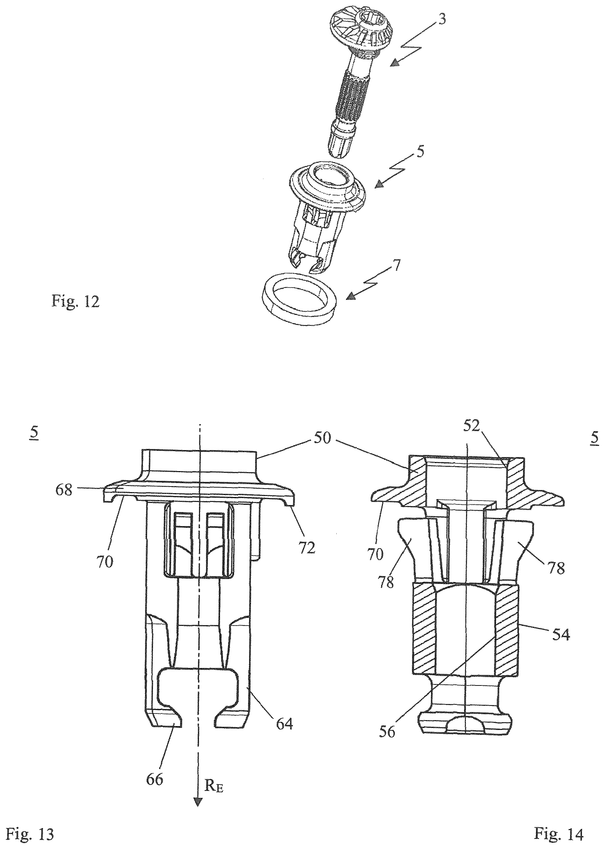

Wie die Seitenansicht der Figuren 3 und 4, die perspektivische Ansicht der Figuren 5 und 6 und die Explosionsdarstellung der Figur 12 zeigen, besteht die Verstelleinheit 1 aus dem Verstellbolzen 3, dem hülsenartigen Aufnahmeteil 5 und einer Dichtung 7. Der Verstellbolzen 3 und das hülsenartige Aufnahmeteil 5 können aus Kunststoffen hergestellt sein, die aufeinander abgestimmt werden. So sollte der Kunststoff des Verstellbolzens 3 härter als der Kunststoff des hülsenartigen Aufnahmeteils 5 sein. Der Verstellbolzen 3 besteht vorzugsweise aus einem schlagzähen Kunststoff, wie Polyamid, und kann eine Faserverstärkung, wie zum Beispiel eine Glasfaserverstärkung, aufweisen. Das hülsenartige Aufnahmeteil 5 ist vorzugsweise aus einem Thermoplast hergestellt. Grundsätzlich ist es aber ebenfalls bevorzugt, eine umgekehrte Abstimmung bzw. Ausbildung der Kunststoffe zu wählen. Sowohl der Verstellbolzen 3 wie auch das hülsenartige Aufnahmeteil 5 werden zweckmäßigerweise durch Spritzgießen hergestellt.

Die Dichtung 7 besteht bevorzugt aus einem Elastomer, einem elastischen Silikon oder einem anderen bekannten Dichtungswerkstoff mit anwendungsbezogener chemischer und physikalischer Beständigkeit.

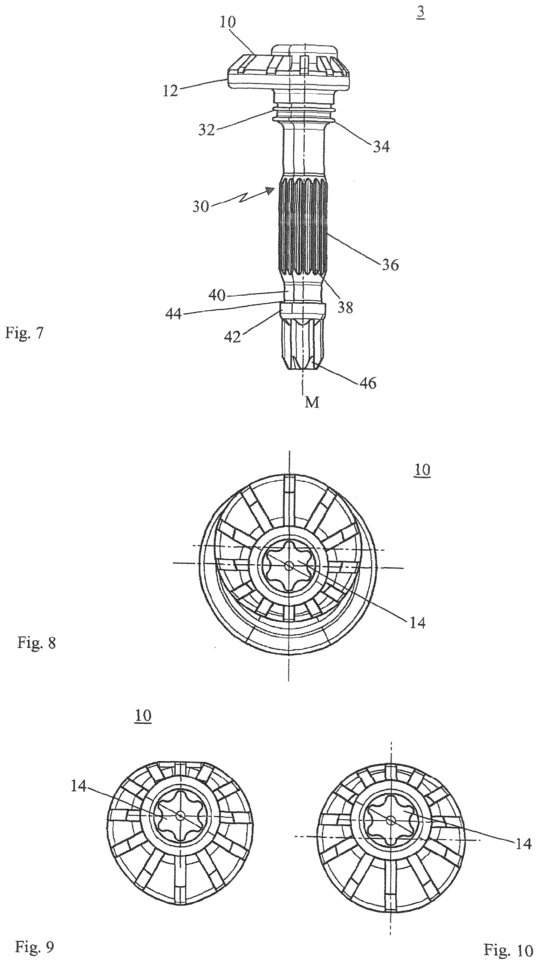

Wie in größerem Detail in Figur 7 gezeigt ist, besteht der Verstellbolzen 3 aus dem Exzenterkopf 10, der mit einem zylindrischen Schaft 30 verbunden ist. Unterhalb angrenzend an den Exzenterkopf 10 weist der zylindrische Schaft 30 bevorzugt einen Dichtungsabschnitt 32 auf. Am Dichtungsabschnitt 32 ist eine Mehrzahl von umlaufenden radial auswärts ragenden Dichtlippen 34, vorzugsweise 2-4 Dichtlippen, vorgesehen. Diese Dichtlippen 32 sind elastisch verformbar, sodass sich eine Dichtungswirkung im Presssitz in Kombination mit einer Innenwand 52 eines Ringflansches 50 des hülsenartigen Aufnahmeteils 5 ergibt (vergleiche Figuren 13, 14). Ergänzend zu dieser Dichtwirkung sind die Dichtlippen 32 drehhemmend, was den Halt des Verstellbolzens 3 im hülsenartigen Aufnahmeteil 5 unterstützt.

Gemäß einer weiteren bevorzugten Ausgestaltung vorliegender Erfindung sind die Dichtlippen 32 mit geringer Verformbarkeit und hoher radialer Steifigkeit vorgesehen, sodass sie als Dichtrippen wirken. Bevorzugt sind die Dichtlippen 32 im Durchmesser gegenüber der glatten zylindrischen Innenwand 52 des Ringflansches so überdimensioniert, dass sie mit einer bestimmten Anpresskraft gegen die Innenwand 52 angedrückt werden. Ein bevorzugt weicheres Material des hülsenartigen Aufnahmeteils 5 gibt dann der Belastung durch die Dichtlippen 32 nach, sodass sich die "harten" Dichtlippen 32 radial in die "weiche" Innenwand 52 einkerben. Die Dichtlippen 32 wirken in dieser bevorzugten Ausführungsform auch nicht nur als Flüssigkeitsabdichtung, sondern sie sichern ebenfalls die axiale Position und die Drehwinkelorientierung bzw. die Position in umfänglicher Richtung des Verstellbolzens 3 relativ zum hülsenartigen Aufnahmeteil 5.

Zudem weist der Schaft 30 bevorzugt einen profilierten Verbindungsabschnitt 36 auf. Dieser erstreckt sich über eine axiale Länge des Schafts 30 im Bereich von 5-60 % der Gesamtlänge des Verstellbolzens 3. Der Verbindungsabschnitt 36, egal, ob mit oder ohne Profilierung, wirkt mit einer Verbindungshülse 54 des hülsenartigen Aufnahmeteils 5 zusammen, um eine Reibschlussverbindung zwischen dem Verstellbolzen 3 und dem hülsenartigen Aufnahmeteil 5 bereitzustellen.

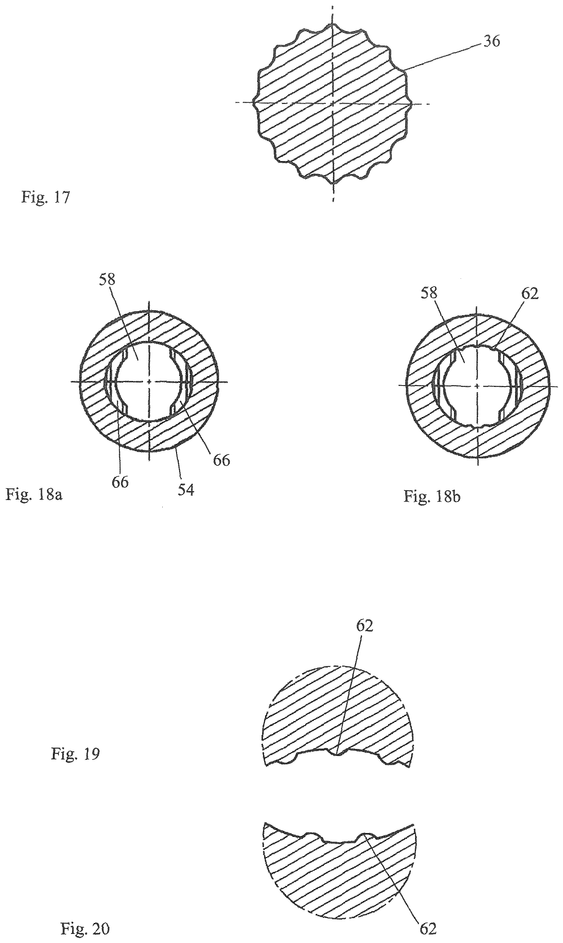

Gemäß einer bevorzugten Ausführungsform vorliegender Erfindung besteht die Profilierung des Verbindungsabschnitts 36 aus einer Mehrzahl gleichmäßig zueinander beabstandeter, radial vorstehender und in axialer Richtung verlaufender Axialstege 38. Diese bilden eine Verzahnung oder zahnradähnliche Kontur des Verbindungsabschnitts 36, wie man anhand der Querschnittsdarstellung des Verbindungsabschnitts 36 in Figur 17 erkennen kann. Ziel der äußeren Profilierung des Verbindungsabschnitts 36 ist es, eine verlässliche Reibschlussverbindung mit der Innenseite 56 der Verbindungshülse 54 herzustellen. Daher ist es ebenfalls bevorzugt, den Verbindungsabschnitt 36 mit einer Rändelung oder einer genoppten Oberfläche (nicht gezeigt) auszustatten, die regelmäßig geordnet oder zufällig geordnet vorgesehen ist. Bezugnehmend auf die Verzahnung 36 der Fig. 17 sind 16 Zähne vorgesehen. Die Formgebung des Exzenterkopfes 10 stellt aufgrund seiner Formgebung einen maximalen seitlichen Verstellweg von beispielsweise 4 mm zur Verfügung. Besitzt der Exzenterkopf 10 die bevorzugte Form eines Gleichdicks oder eine Herzform (siehe unten), dann erzeugt die Verzahnung 36 des Schafts 30 eine Verstellweite pro Zahn oder eine Schrittweite bei der Verstellung von "max. Verstellweg / Anzahl der Zähne" = 4 mm / 16 = 0,25 mm.

Die Profilierung des Verbindungsabschnitts 36 realisiert in Zusammenwirkung mit der Innenseite 56 der Verbindungshülse 54 eine stufenlose oder eine stufenweise Einstellung bzw. Verstellung des Verstellbolzens 3 im hülsenartigen Aufnahmeteil 5. Für eine stufenlose Drehung und einen bevorzugt stufenlosen axialen Versatz des Verbindungsabschnitts 36 in der Verbindungshülse 54 und somit des Verstellbolzens 3 im hülsenartigen Aufnahmeteil 5 ist entweder die Innenseite 56 oder die Außenseite des Verbindungsabschnitts 36 oder keine von beiden mit radialen Vorsprüngen, wie beispielsweise die Axialstege 38, versehen. Daher entsteht keine Verzahnung zwischen den gegenüberliegenden Flächen. Diese stufenlose Verstellbarkeit wird bevorzugt unterstützt durch einen unrunden Freiraum 58 bezogen auf den inneren Querschnitt der zentralen Bohrung der Verbindungshülse 54. Weist der Verbindungsabschnitt 36 keine Verzahnung 38 auf, dann wird der unrunde Freiraum 58 in der Verbindungshülse 54 bevorzugt alternativ oder in Kombination durch eine im Querschnitt elliptisch geformte Durchgangsöffnung (siehe Fig. 18a), radial einwärts ragende, teilweise umfänglich verlaufende Bogensegmente mit flächiger Erstreckung oder mit stegartiger Erstreckung (nicht gezeigt) oder durch radial vorstehende und in axialer Richtung verlaufende Axialstege 62 (Fig. 18b) realisiert. Vorzugsweise sind gleichartige konstruktive Ausgestaltungen, wie Bogensegmente und/oder Axialstege, paarweise einander gegenüberliegend angeordnet.

Generell hat der unrunde Freiraum 58 der Durchgangsöffnung innerhalb der Verbindungshülse 54 den Vorteil, dass beim Einsetzen des Verbindungsabschnitts 36 in den Freiraum 58 die Verbindungshülse 54 verformt wird. Diese Verformung basiert auf der Änderung der Gestalt der Verbindungshülse 54 und auf einem elastischen Materialverhalten, die jeweils kräftemäßig zur Stärke des Reibschlusses beitragen. Im Vergleich dazu basiert der Reibschluss eines Freiraums mit nur rundem Querschnitt lediglich auf den Kräften durch die Elastizität des Materials der Verbindungshülse 54, die geringer ausfallen.

Wenn sich der Verbindungsabschnitt 36 mit oder ohne Verzahnung 37 im unrunden Freiraum 58 dreht, dann walken die Kontaktflächen aufeinander. Dies ist dann der Fall, wenn der Werkstoff des Schafts 30 und/oder der Verbindungshülse 54 elastisch verformbar ist. Andernfalls reiben die aneinander anliegenden Flächen aneinander.

Die obige Kombination von Reibschlusskräften durch Materialelastizität und Gestaltverformung ist bevorzugt auch dadurch erzielbar, dass der Freiraum 58 der zentralen Bohrung einen runden Querschnitt aufweist, während der Querschnitt des Verbindungsabschnitts 36 elliptisch oder allgemein unrund ausgebildet ist (siehe unten). Es treten ebenfalls die oben beschriebenen Effekte auf, nur dass die Formgebung zwischen Verbindungshülse 54 und Schaft 30 vertauscht ist.

Gemäß der weiteren bevorzugten Ausführungsform vorliegender Erfindung besteht der Schaft 30 aus einem Verbindungsabschnitt 36 mit einem elliptischen oder unrunden, nicht eckigen Querschnitt. Zudem hat der Freiraum 58 der Durchgangsbohrung der Verbindungshülse 54 ebenfalls einen elliptischen oder allgemein unrunden Querschnitt. Betrachtet man die möglichen Drehwinkelorientierungen zwischen dem Verstellbolzen 3 und dem Aufnahmeteil 5, dann ergeben sich, vorzugsweise bei zwei elliptischen Querschnitten, Drehwinkelbereiche geringer Klemmkräfte und Drehwinkelbereiche größerer Klemmkräfte. Dies ergibt sich aus der Orientierung der elliptischen Halbachsen beider Querschnitte zueinander. Sind die kurzen und langen elliptischen Halbachsen von Schaftquerschnitt und Hülsenquerschnitt parallel zueinander, sind die Klemmkräfte kleiner als wenn die lange elliptische Halbachse des Schaftquerschnitts parallel zur kurzen elliptischen Halbachse des Hülsenquerschnitts angeordnet ist. Es ist bevorzugt, dass beim Einsetzen und ersten Verstellen der Verstelleinheit 1 die Klemmkräfte und somit auch die Haltekräfte noch gering sind. Dies erleichtert die Verstellung. Erreicht die Verstelleinheit 1 seine optimale Verstellposition, sind die Klemmkräfte durch weiteres Drehen des Verstellbolzens erhöht. Damit sind auch die Haltekräfte des Exzenterkopfes 10 höher und unterstützen die Position der Bauteile A,B.

Weist der Verbindungsabschnitt 36 eine Verzahnung 38 oder eine genoppte Struktur auf - also eine sich in Umfangsrichtung regelmäßig verändernde Struktur - gewährleistet dies eine stufenweise Verstellung des Verstellbolzens 3 innerhalb des hülsenartigen Aufnahmeteils 5.

Neben der stufenweisen Verstellung des Verstellbolzens 3 relativ zum hülsenartigen Aufnahmeteil 5 wird dadurch auch eine Positionssicherung und Rückdrehsicherung des Verstellbolzens 3 innerhalb des hülsenartigen Aufnahmeteils 5 sichergestellt. So blockiert bevorzugt der gegenseitige Eingriff der Axialstege 38 und 62 oder auch ein Eingriff eines Axialstegs 38 zwischen umfänglich benachbarten Bogensegmenten 60.

An den Verbindungsabschnitt 36 schließt sich bevorzugt ein durchmesserverringerter Abschnitt 40 an. Dieser wird in axialer Richtung durch einen Ringbund 42 mit einer Schulter 44 begrenzt. Am Ende des Schafts 30 ist vorzugsweise ein zweites Antriebsmittel 46 in Form eines Schlitzes, eines Kreuzes, eines Torx-Ansatzes oder dergleichen vorgesehen.

Es ist ebenfalls bevorzugt, den Verstellbolzen 3 mit einer Durchgangsöffnung (nicht gezeigt) auszustatten. Die Durchgangsöffnung hat vorzugsweise einen nicht-rotationssymmetrischen Querschnitt, so dass ein eingreifendes Werkzeug über Formschluss eine drehfeste Verbindung zum Verstellbolzen 3 herstellt. Vorzugweise ist über beide endseitige Öffnungen in die Durchgangsöffnung eingreifbar, die das mindestens eine Antriebsmittel des Verstellbolzens 3 darstellt. Die Durchgangsöffnung hat dazu bevorzugt einen elliptischen, eckigen oder polygonalen Querschnitt und das eingreifende Werkzeug ist passend dazu, vorzugsweise komplementär, geformt.

Gemäß der oben beschriebenen Ausführungsformen wird die kraftschlüssige Verbindung oder Selbsthemmung zwischen dem Verbindungsabschnitt 36 des Verstellbolzens 3 und der Innenseite 56 der Verbindungshülse 54 gebildet. Es ist ebenfalls bevorzugt, den Verbindungsabschnitt 36 gegenüber der radialen Innenseite 52 des Ringflansches 50 oder gegenüber der radialen Innenseite des Federstegs 64, im Speziellen der Kante eines freien Endes 66, anzuordnen. In diesen alternativen Ausgestaltungen weist die Innenseite 52 oder der Federsteg 64 die strukturellen Merkmale auf, die oben in Kombination mit der Innenseite 56 beschrieben worden sind. Auf diese Weise ist das Verstellelement auch kürzer und kompakter realisierbar.

In den Abschnitt 40 zwischen Verbindungsabschnitt 36 und Ringbund 42 greift bevorzugt mindestens ein radial einwärts gebogenes freies Ende 66 eines Federschenkels 64 ein. Beim Einsetzen des Schafts 30 in das hülsenartige Aufnahmeteil 5 werden die Enden 66 der Federschenkel 64 durch den Ringbund 42 radial nach außen gedrückt, um dann wieder in den Abschnitt 40 einzuschnappen. Da bevorzugt der Verbindungsabschnitt 36 und der Ringbund 42 einen axialen Hinterschnitt bilden, sichern die Enden 66 der Federschenkel 64 den Verstellbolzen 3 gegen ein axiales Lösen aus dem hülsenartigen Aufnahmeteil 5. Vorzugsweise ist die radial einwärts angeordnete und dem Ringflansch 50 zugewandte Kante des Endes 66 scharfkantig ausgebildet. Diese erschwert ein Lösen des Verstellbolzens 3 aus den Federschenkeln 64. Ebenfalls bevorzugt ist der Abschnitt 40 an einer anderen axialen Position des Verstellbolzens 3 angeordnet, um den Verstellbolzen 3 verliersicher zu halten. Vorzugsweise könnte der Abschnitt 40 auch zwischen den Bereichen 36 und 34 liegen.

Wie oben bereits erläutert worden ist, umfasst der Ringflansch 50 die Innenwand 52, die bevorzugt mit der Dichtlippe 34 zusammenwirkt. Zudem umfasst der Ringflansch 50 bevorzugt einen umlaufenden Radialkragen 68. Der Radialkragen 68 stellt die Anlagefläche 70 bereit, mit der sich das hülsenartige Aufnahmeteil 5 direkt oder über die Dichtung 7 am ersten Bauteil A abstützt. Nachdem das hülsenartige Aufnahmeteil 5 in die Installationsöffnung D eingesetzt worden ist, stützt sich ein bevorzugt axial vorstehender und umfänglich umlaufender oder in Segmenten vorhandener Rand 72 am ersten Bauteil A ab. Bei einem ausreichenden Druck auf das hülsenartige Aufnahmeteil 5 in Einsetzrichtung R_{E} wird der Radialkragen 68 in axialer Richtung verformt und erzeugt eine gewisse Vorspannung des hülsenartigen Aufnahmeteils 5 gegen das erste Bauteil A. In diesem vorgespannten Zustand schnappen bevorzugt Raststege 78 radial nach außen und verriegeln das hülsenartige Aufnahmeteil 5 in der Installationsöffnung D unter dem Bauteil A.

Zwischen der Anlagefläche 70 und dem ersten Bauteil A ist vorzugsweise die Dichtung 7 angeordnet. Nach der Installation des hülsenartigen Aufnahmeteils 5 in der Installationsöffnung D wird die Dichtung 7 zwischen dem Radialkragen 68 und dem Bauteil A gehalten.

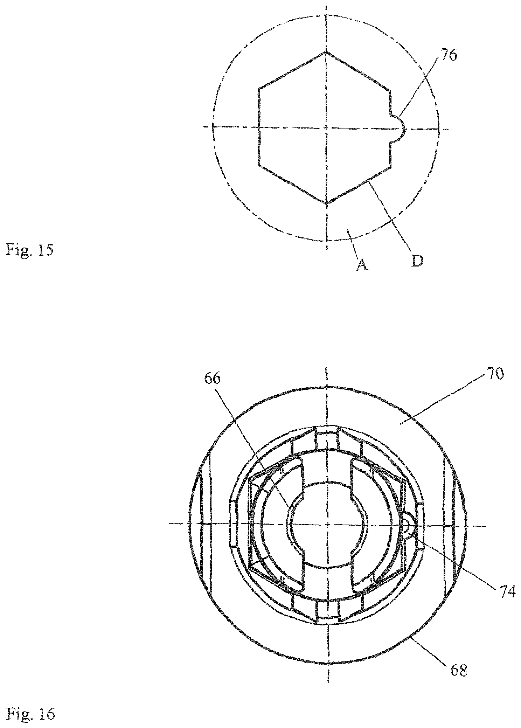

Das hülsenartige Aufnahmeteil 5 weist unterhalb des Ringflansches 68 eine im Durchmesser bevorzugt unrunde Gestalt auf. Entsprechend ist das hülsenartige Aufnahmeteil 5 im Durchmesser bevorzugt regelmäßig mehreckig, wie beispielsweise sechs- oder achteckig. Komplementär dazu ist die Installationsöffnung D im ersten Bauteil A ausgebildet, um einen drehungshemmenden Formschluss zwischen dem ersten Bauteil A und dem hülsenartigen Aufnahmeteil 5 bereitzustellen. Die aneinander angepassten Formen der Installationsöffnung D und des hülsenartigen Aufnahmeteils 5 ist in den Figuren 15 und 16 gezeigt.

Zudem weist bevorzugt das hülsenartige Aufnahmeteil 5 einen radial vorstehenden Positionierungssteg 74 auf, der in eine entsprechende Nut 76 angrenzend an die Installationsöffnung D im ersten Bauteil A eingreift. Diese Verbindung realisiert einerseits eine Verdrehsicherung zwischen dem ersten Bauteil A und dem hülsenartigen Aufnahmeteil 5, selbst wenn kein Formschluss zwischen der Installationsöffnung D und dem hülsenartigen Aufnahmeteil 5 vorliegen sollte. Des Weiteren stellt bevorzugt die Verbindung aus Positionierungssteg 74 und der Nut 76 eine ausgerichtete Montage der Verstelleinheit 1 innerhalb der Installationsöffnung D sicher. Sofern der Verstellbolzen 3 bereits in dem hülsenartigen Aufnahmeteil 5 vormontiert ist, kann der Exzenterkopf 10 basierend auf der Kombination aus Positionierungssteg 74 und Nut 76 in einer vorgegebenen Position und somit Drehwinkelorientierung im ersten Bauteil A installiert werden.

Der Exzenterkopf 10 ist in verschiedenen bevorzugten Ausführungsformen vorliegender Erfindung in den Figuren 9 und 10 gezeigt. Er verfügt über ein Antriebsmittel 14, welches in gleicher Weise und Funktion ausgebildet ist wie das oben bereits beschriebene Antriebsmittel 46 am Schaft 30. Wie man anhand der Draufsichten der Figuren 9 und 10 erkennen kann, besitzt der Exzenterkopf 10 eine scheibenähnliche Gestalt. Gemäß einer bevorzugten Ausgestaltung hat diese Scheibe eine runde Form (siehe Figur 10), eine elliptische Form (nicht gezeigt), eine ovale Form (nicht gezeigt), eine unrunde oder asymmetrische Form (nicht gezeigt) und gemäß einer anderen bevorzugten Ausgestaltung eine herzähnliche Form bzw. die Form eines Gleichdicks. Ein Gleichdick ist eine Kontur konstanter Breite, deren geschlossene Linie in jeder Lage innerhalb eines geeigneten Quadrats stets alle Seiten berührt. Ein bekanntes Beispiel für ein Gleichdick ist das Reuleaux-Dreieck. (siehe Figur 9).

Der Schaft 30 und somit der Drehpunkt des Exzenterkopfes 10 sind außermittig am Exzenterkopf 10 angeordnet (siehe Figuren 4, 7, 11). Entsprechend ist der umlaufende Rand 12 (siehe oben) je nach Drehwinkel des Exzenterkopfes 10 und somit des Verstellbolzens 3 in Bezug auf das feststehende erste Bauteil A unterschiedlich weit von der zentralen Mittelachse M entfernt. Liegt somit die Verstellrippe C des zweiten Bauteils B am Rand 12 an, dann wird durch Drehen des Verstellbolzens 3 der Abstand zwischen dem Rand 12 und der Mittelachse M verändert, bevorzugt vergrößert, und diese Änderung wird über die Verstellrippe C auf das zweite Bauteil B übertragen. Da das hülsenartige Aufnahmeteil 5 fest im ersten Bauteil A angeordnet ist, ändert sich somit durch Drehen des Verstellbolzens 3 die Relativposition der Bauteile A, B zueinander.

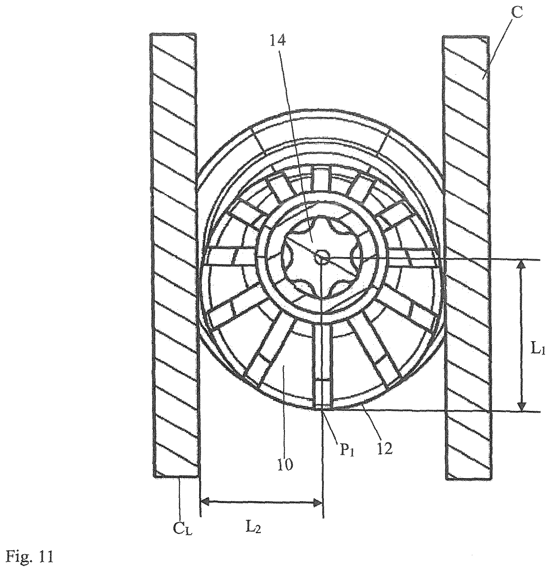

Diesen Zusammenhang veranschaulicht auch Figur 11. Wird vorzugsweise der Exzenterkopf 10 über das Antriebsmittel 14 um einen Winkel von 90° nach rechts gedreht, dann würde sich der Randpunkt P1 in Anlage mit der linken Verstellrippe Cl bewegen. Entsprechend würde die linke Verstellrippe Cl, die vor der Drehung des Exzenterkopfes 10 noch die Strecke L₂ vom Mittelpunkt M des Exzenterkopfes 10 entfernt war, nun um die Strecke Lv = L₁ - L₂ nach links versetzt werden. Dabei bezeichnet L₁ die Entfernung zwischen dem Mittelpunkt M des Exzenterkopfes 10 und dem Punkt P1 auf dem Rand 12 in Figur 11. Ist hier die optimale Verstellposition erreicht, ist es bevorzugt, wenn in diesem Drehwinkelbereich vom Schaft 30 relativ zur Verbindungshülse 54 die Klemmkräfte zwischen Schaft 30 und der Verbindungshülse 54 maximal oder zumindest gesteigert sind.

Wird die Drehrichtung umgedreht, dann greift der Rand 12 entsprechend an der anderen Verstellrippe C an. Auf diese Weise ist das Bauteil B auch in die andere Richtung versetzbar, sofern zwei parallel angeordnete Verstellrippe C vorgesehen sind.

Das Einstellverfahren der Relativposition zwischen den beiden Bauteilen A, B lässt sich mit den folgenden Schritten zusammenfassen. Zunächst wird in einem ersten Schritt das hülsenartige Aufnahmeteil 5 in der Installationsöffnung D des feststehenden ersten Bauteils A befestigt. Dabei wird vorzugsweise alternativ zunächst das hülsenartige Aufnahmeteil 5 und danach der Verstellbolzen 3 innerhalb des hülsenartigen Aufnahmeteils 5 angeordnet. Es ist aber ebenfalls bevorzugt, dass die Verstelleinheit 1 bestehend aus hülsenartigen Aufnahmeteil 5 und Verstellbolzen 3 bereits in einem vormontierten Zustand vorliegt. Entsprechend würde dann die gesamte Verstelleinheit 1 in der Installationsöffnung D befestigt werden.

Weiterhin bevorzugt erfolgt das Einstellen einer Grundeinstellung des Exzenterkopfes 10 in Bezug auf das hülsenartige Aufnahmeteil 5. Dieser Schritt kann bereits in einem vormontierten Zustand der Verstelleinheit 1 realisiert sein. Es ist ebenfalls bevorzugt, dieses Einstellen erst dann vorzunehmen, wenn die Verstelleinheit 1 in der Installationsöffnung D installiert worden ist.

Nachfolgend wird das zweite Bauteil B mit seiner mindestens einen Verstellrippe C angrenzend an den Rand 12 des Exzenterkopfes 10 angeordnet. Dadurch dass der Rand 12 und die Verstellrippe Rippe C aneinander angreifen oder zumindest unmittelbar benachbart sind, wird sichergestellt, dass durch eine Drehung des Verstellbolzens 3 der Rand 12 an der Verstellrippe C angreift und diese entsprechend seiner Drehung versetzt (siehe oben). Somit wird durch das Drehen des Exzenterkopfes 10 mit Hilfe eines der zwei Antriebsmittel 14, 46 am Verstellbolzen 3 das zweite Bauteil B bezogen auf das erste Bauteil A seitlich versetzt. In diesem Zusammenhang ist es bevorzugt, entweder das Antriebsmittel 14 zu nutzen, um den Verstellbolzen 3 zu drehen oder aber das Antriebsmittel 46 anzugreifen, um beispielsweise von der Innenseite des zweiten Bauteils B, vorzugsweise eine Karosserie, den Verstellbolzen 3 zu drehen.

Während dieses Verstellvorgangs erfolgt zunächst bevorzugt ein reibschlüssiges Halten des profilierten Verbindungsabschnitts 36 im unrunden Freiraum 58 des zylindrischen Axialabschnitts 54 des Aufnahmeteils fünf. Zudem wird während dieses Verstellvorgangs der Verstellbolzen 3 bei bevorzugter konstanter Axialposition im hülsenartigen Aufnahmeteil 5 stufenlos oder stufenweise versetzt bzw. abgestuft gedreht.

Im Hinblick auf das Verbinden des Verstellbolzens 3 mit dem hülsenartigen Aufnahmeteil 5 ist es ebenfalls bevorzugt, diese miteinander derart zu Verrasten, dass der Verstellbolzen 3 verliersicher und drehbar am hülsenartigen Aufnahmeteil 5 gehalten wird.

**Bezugszeichenliste**

| | | | |
|---|---|---|---|
| | | 40 | Abschnitt |
| A | erstes Bauteil | 42 | Ringbund |
| B | zweites Bauteil | 44 | Schulter |
| C | Verstellrippe | 46 | Antriebsmittel |
| Cl | linke Verstellrippe | 50 | Ringflansch |
| D | Installationsöffnung des ersten Bauteils | 52 | Innenwand |
| 1 | Verstelleinheit | 54 | Verbindungshülse |
| 3 | Verstellbolzen | 56 | Innenseite der Verbindungshülse |
| 5 | hülsenartiges Aufnahmeteil | 58 | Freiraum |
| 7 | Dichtung | 62 | Axialsteg |
| 10 | Exzenterkopf | 64 | Federschenkel |
| 12 | radiale Umfangsfläche, Rand | 66 | freies Ende des Federschenkels |
| 14 | erstes Antriebsmittel | 68 | Radialkragen |
| 30 | zylindrischer Schaft | 70 | Anlagefläche |
| 32 | Dichtabschnitt | 72 | Rand |
| 34 | Dichtlippe | 74 | Positionierungssteg |
| 36 | Verbindungsabschnitt | 76 | Nut |
| 37 | Verzahnung | 78 | Raststeg |
| 38 | Axialsteg | M | Mittelachse |

## Patentansprüche

1. Verstelleinheit (1) zum Einstellen einer Relativposition zwischen einem fest angeordneten ersten Bauteil (A) und einem versetzbar gelagerten zweiten Bauteil (B), die die folgenden Merkmale aufweist:
a. einen Verstellbolzen (3) mit einem Exzenterkopf (10), einem Schaft (30) und mindestens einem, vorzugsweise zwei endseitig angeordnete, Antriebsmittel (14, 46) sowie
b. ein hülsenartiges Aufnahmeteil (5), in dem der zylindrische Schaft (30) des Verstellbolzens (3) aufnehmbar und relativ zum hülsenartigen Aufnahmeteil (5) in einer Drehwinkelorientierung verstellbar ist, wobei
c. der Exzenterkopf (10) eine umlaufende radiale Anlagefläche (12) bereitstellt, an der das zweite Bauteil (B) abstützbar ist, so dass eine Lateralposition des zweiten Bauteils (B) relativ zum ersten Bauteil (A) durch Drehen des Verstellbolzens (3) über das mindestens eine Antriebsmittel (14, 46) einstellbar ist, **dadurch gekennzeichnet, dass**
d. der zylindrische Schaft (30) des Verstellbolzens (3) über eine Reibschlussverbindung zwischen dem Schaft (30) und dem Aufnahmeteil (5) in dem Aufnahmeteil (5) haltbar ist.

2. Verstelleinheit (1) gemäß Anspruch 1, in der das hülsenartige Aufnahmeteil (5) einen federnden Ringflansch (50) umfasst, über den das Aufnahmeteil (5) mit Hilfe einer Mehrzahl von Federschenkeln (74) in einer Öffnung (D) des ersten Bauteils (A) befestigbar ist.

3. Verstell einheit (1) gemäß einem der vorhergehenden Ansprüche, in der der Exzenterkopf (10) eine runde Form mit einem exzentrischen Drehpunkt (14) oder die Form eines Gleichdicks aufweist.

4. Verstell einheit (1) gemäß einem der vorhergehenden Ansprüche, in der ein Verbindungsabschnitt profiliert ist und eine Mehrzahl von Längsrippen (38) als Verzahnung, eine Rändelung oder eine genoppte Oberfläche aufweist.

5. Verstelleinheit (1) gemäß einem der vorhergehenden Ansprüche, in der der zylindrische Schaft (30) benachbart zum Exzenterkopf (10) mindestens eine umlaufende Dichtlippe (34) aufweist, die abdichtend und/oder drehungshemmend mit dem Ringflansch (50) des Aufnahmeteils (5) zusammenwirkt.

6. Verstelleinheit (1) gemäß einem der vorhergehenden Ansprüche, in der das hülsenartige Aufnahmeteil (5) einen zylindrischen Axialabschnitt (54) mit einer Durchgangsbohrung (58) aufweist, die im Querschnitt einen unrunden Freiraum bereitstellt, in dem der Verbindungsabschnitt (36) reibschlüssig aufnehmbar ist.

7. Verstelleinheit (1) gemäß Anspruch 6, in der der unrunde Freiraum durch teilweise umlaufende innere Bogensegmente (60) im Axialschnitt, durch einen elliptischen Querschnittsverlauf der Innenwand des Axialabschnitts (58) oder durch eine profilierte Oberflächengestaltung der Innenwand des Axialabschnitts (58) gebildet ist.

8. Verstelleinheit (1) gemäß einem der vorhergehenden Ansprüche, in der das hülsenartige Aufnahmeteil (5) einen zylindrischen Axialabschnitt (54) mit einer Durchgangsbohrung (58) aufweist, die im Querschnitt einen runden Freiraum bereitstellt, in dem der Verbindungsabschnitt mit einem unrunden Querschnitt reibschlüssig aufnehmbar ist.

9. Verstell einheit (1) gemäß einem der vorhergehenden Ansprüche in Kombination mit Anspruch 4, in der der Axialabschnitt (58) an einer radialen Innenseite eine Mehrzahl von Axialrippen (62) aufweist, die Raststellen mit dem profilierten Verbindungsabschnitt (36) des Verstellbolzens (3) bilden.

10. Verstelleinheit (1) gemäß Anspruch 9, in der zumindest zwei der Axialrippen (62) unterschiedliche radiale Höhen aufweisen.

11. Verstell einheit (1) gemäß einem der vorhergehenden Ansprüche, in der das hülsenartige Aufnahmeteil (5) an einer radialen Außenseite einen Markierungsvorsprung (74) aufweist, der in Kombination mit einer passenden Aufnahme (76) angrenzend an eine Installationsöffnung (D) des ersten Bauteils (A) eine ausgerichtete Installation des hülsenartigen Aufnahmeteils (5) im ersten Bauteil (A) gewährleistet.

12. Verstellbare Verbindung zwischen einem ersten Bauteil (A) und einem zweiten Bauteil (B) mithilfe der Verstelleinheit (1) gemäß einem der Ansprüche 1 bis 11.

13. Einstellverfahren einer Relativposition eines versetzbar gelagerten zweiten Bauteils (B) in Bezug auf ein fest angeordnetes erstes Bauteil (A), in dem eine Installationsöffnung D) vorgesehen ist, wobei eine Verstelleinheit nach einem der Ansprüche 1 bis 11 verwendet wird, und **gekennzeichnet durch** die folgenden Schritte:
a. Befestigen (I) des hülsenartigen Aufnahmeteils (5) und des Verstellbolzens (3) in der Installationsöffnung (D), wobei das Aufnahmeteil (5) und der Verstellbolzen (3) vormontiert oder nacheinander in die Installationsöffnung (D) eingesetzt werden,
b. Einstellen (III) einer Grundeinstellung des Exzenterkopfes (10) in Bezug auf das Aufnahmeteil (5),
c. Anordnen (IV) des zweiten Bauteils (B) mit einer Verstellrippe (C) angrenzend an den Exzenterkopf (10) und
d. Drehen (V) des Exzenterkopfes (10) mit Hilfe eines der zwei Antriebsmittel (14, 46) und dadurch laterales Versetzen (VI) des zweiten Bauteils (B) bezogen auf das erste Bauteil (A).

14. Einstellverfahren gemäß Anspruch 13, mit dem weiteren Schritt:
Verrasten (II) des Verstellbolzens im hülsenartigen Aufnahmeteil, so dass dieser verliersicher und drehbar gehalten ist.

15. Einstellverfahren gemäß Anspruch 13 oder 14, mit dem weiteren Schritt:
reibschlüssiges Halten des Verbindungsabschnitts im unrunden oder runden Freiraum des zylindrischen Axialabschnitts des Aufnahmeteils und
stufenloses oder abgestuftes Drehen des Verstellbolzens bei konstanter Axialposition im Aufnahmeteil.

16. Einstellverfahren gemäß Anspruch 15, mit dem weiteren Schritt:
Drehen des Verstellbolzens mithilfe des kopfabgewandten Antriebsmittels, nachdem das zweite Bauteil (B) mit einer Verstellrippe (C) angrenzend an den Exzenterkopf (10) angeordnet worden ist.

## Claims

1. Adjusting unit (1) in order to adjust a relative position between a fixedly arranged first component (A) and a relocatably mounted second component (B) comprising the following features:
a. an adjusting bolt (3) with an eccentric head (10), a shaft (30) and at least one drive means (14, 46), preferably two drive means (14, 46) arranged at the end, and
b. a sleeve-like receiving member (5) in which the cylindrical shaft (30) of the adjusting bolt (3) is receivable and is adjustable relatively to the sleeve-like receiving member (5) in a rotation angle orientation, whereas
c. the eccentric head (10) provides a circumferential radial contact surface (12) at which the second component (B) is braceable so that a lateral position of the second component (B) is adjustable relatively to the first component (A) by rotating the adjusting bolt (3) via the at least one drive means (14, 46), **characterized in that**
d. the cylindrical shaft (30) of the adjusting bolt (3) is supportable via a friction connection between the shaft (30) and the receiving member (5) in the receiving member (5).

2. Adjusting unit (1) according to claim 1 in which the sleeve-like receiving member (5) comprises a resilient ring flange (50) via which the receiving member (5) is mountable in an opening (D) of the first component (A) by means of a plurality of spring legs (74).

3. Adjusting unit (1) according to one of the preceding claims in which the eccentric head (10) has a round shape with an eccentric pivot point (14) or the shape of an orbiform curve.

4. Adjusting unit (1) according to one of the preceding claims, in which a connecting portion is profiled and comprises a plurality of longitudinal ribs (38) as interlockings, a knurling or a burled surface.

5. Adjusting unit (1) according to one of the preceding claims, in which the cylindrical shaft (30) adjacent to the eccentric head (10) comprises at least one circumferential sealing lip (34) which acts together with the ring flange (50) of the receiving member (5) in a sealing and/or anti-rotational way.

6. Adjusting unit (1) according to one of the preceding claims, in which the sleeve-like receiving member (5) comprises a cylindrical axial portion (54) with a through bore (58) which provides in its cross-section a non-round open space in which the connecting portion (36) is frictionally receivable.

7. Adjusting unit (1) according to claim 6, in which the non-round open space is formed by partly circumferential inner arc segments (60) in the axial section, by an elliptical cross-sectional course of the inner wall of the axial portion (58) or by a profiled surface design of the inner wall of the axial portion (58).

8. Adjusting unit (1) according to one of the preceding claims in which the sleeve-like receiving member (5) comprises a cylindrical axial portion (54) with a through bore (58), which provides in its cross-section a round open space in which the connecting portion with a non-round cross-section is frictionally receivable.

9. Adjusting unit (1) according to one of the preceding claims in combination with claim 4, in which the axial portion (58) comprises at a radial inner side a plurality of axial ribs (62) which form together with the profiled connecting portion (36) of the adjusting bolt (3) locking points.

10. Adjusting unit (1) according to claim 9, in which at least two of the axial ribs (62) have different radial heights.

11. Adjusting unit (1) according to one of the preceding claims in which the sleeve-like receiving member (5) comprises at a radial outer side a reference projection (74) which ensures an aligned installation of the sleeve-like receiving member (5) in combination with an adapted reception means (76) adjacent to an installation opening (D) of the first component (A).

12. Adjustable connection between a first component (A) and a second component (B) by means of the adjusting unit (1) according to one of the claims 1 to 11.

13. Adjusting method of a relative position of a relocatably mounted second component (B) with respect to a fixedly arranged first component (A) in which an installation opening (D) is provided, whereby an adjusting unit according to one of the claims 1 to 11 is used, **characterized by** the following steps:
a. mounting (I) of the sleeve-like receiving member (5) and the adjusting bolt (3) in the installation opening (D) wherein the receiving member (5) and the adjusting bolt (3) are pre-assembled or they are subsequently installed within the installation opening (D),
b. adjusting (III) of a basic setting of the eccentric head (10) with respect to the receiving member (5),
c. arranging (IV) of the second component (B) with an adjusting rib (C) adjacent to the eccentric head (10) and
d. rotating (V) of the eccentric head (10) by means of one of the two drive means (14, 46) and thereby laterally displacing (VI) the second component (B) with respect to the first component (A).

14. Adjusting method according to claim 13 comprising the further step:
snapping (II) of the adjusting bolt into the sleeve-like receiving member so that it is retained secured against unintentional releasing and rotatably.

15. Adjusting method according to claim 13 or 14, comprising the further step:
holding the connecting portion in the non-round or round open space of the cylindrical axial portion of the receiving member in a frictional way and
rotating the adjusting bolt at a constant axial position in the receiving member in a stepless or stepped way.

16. Adjusting method according to claim 15, comprising the further step:
rotating of the adjusting bolt by means of the drive means facing away from the head after the second component (B) has been arranged adjacent to the eccentric head (10) with an adjusting rib (C).

## Revendications

1. Unité de réglage (1) pour ajuster une position relative entre un premier composant (A) disposé fixement et un second composant (B) monté de façon à pouvoir être déplacé, qui présente les caractéristiques suivantes :
a) un boulon ajustable (3), doté d'une tête excentrique (10), d'une tige (30) et d'au moins un, de préférence deux moyens d'entraînement (14, 46) disposés à l'extrémité et
b) une pièce de réception (5) de type douille, dans laquelle la tige cylindrique (30) du boulon ajustable (3) peut être logée et ajustée par rapport à la pièce de réception (5) de type douille selon une orientation angulaire, dans laquelle
c) la tête excentrique (10) fournit une surface de contact (12) radiale périphérique, sur laquelle le second composant (B) peut être appuyé, de sorte qu'une position latérale du second composant (B) peut être réglée par rapport au premier composant (A) par rotation du boulon ajustable (3) via ledit moyen d'entraînement (14, 46) au moins, **caractérisée en ce que**
d) la tige cylindrique (30) du boulon ajustable (3) peut être maintenue dans la pièce de réception (5) moyennant une liaison par friction entre la tige (30) et la pièce de réception (5).

2. Unité de réglage (1) selon la revendication 1, dans laquelle la pièce de réception (5) de type douille comprend une bride annulaire (50) à ressorts, au moyen de laquelle la pièce de réception (5) peut être fixée dans une ouverture (D) du premier composant (A) à l'aide de multiples branches de ressort (74).

3. Unité de réglage (1) selon l'une des revendications précédentes, dans laquelle la tête excentrique (10) présente une forme ronde avec un point de rotation excentrique (14) ou la forme d'un orbiforme.

4. Unité de réglage (1) selon l'une des revendications précédentes, dans laquelle une partie de raccordement est profilée et présente de multiples nervures longitudinales (38) servant à l'engrènement, un moletage ou une surface à picots.

5. Unité de réglage (1) selon l'une des revendications précédentes, dans laquelle la tige cylindrique (30) adjacente à la tête excentrique (10) présente au moins une lèvre d'étanchéité périphérique (34), qui interagit avec la bride annulaire (50) de la pièce de réception (5) de façon étanche et/ou antigiratoire.

6. Unité de réglage (1) selon l'une des revendications précédentes, dans laquelle la pièce de réception (5) de type douille présente une partie axiale cylindrique (54) avec un trou traversant (58), qui fournit un espace libre ovalisé en coupe transversale, dans lequel la partie de raccordement (36) peut être logée moyennant une liaison par friction.

7. Unité de réglage (1) selon la revendication 6, dans laquelle l'espace libre ovalisé est formé par des segments d'arc (60) intérieurs en partie périphériques en coupe axiale, par un profil elliptique en coupe transversale de la paroi intérieure de la partie axiale (58) ou par une configuration de surface profilée de la paroi intérieure de la partie axiale (58).

8. Unité de réglage (1) selon l'une des revendications précédentes, dans laquelle la pièce de réception (5) de type douille présente une partie axiale cylindrique (54) avec un trou traversant (58), qui fournit un espace libre rond en coupe transversale, dans lequel la partie de raccordement avec une section transversale ovalisée peut être logée moyennant une liaison par friction.

9. Unité de réglage (1) selon l'une des revendications précédentes en combinaison avec la revendication 4, dans laquelle la partie axiale (58) présente de multiples nervures axiales (62) sur une face intérieure radiale, qui forment des points d'encliquetage avec la partie de raccordement (36) profilée du boulon ajustable (3).

10. Unité de réglage (1) selon la revendication 9, dans laquelle au moins deux des nervures axiales (62) présentent des hauteurs radiales différentes.

11. Unité de réglage (1) selon l'une des revendications précédentes, dans laquelle la pièce de réception (5) de type douille présente un épaulement de repérage (74) sur une face extérieure radiale, qui garantit une installation alignée de la pièce de réception (5) de type douille dans le premier composant (A) en combinaison avec un logement approprié (76) contigu à une ouverture d'installation (D) du premier composant (A).

12. Raccordement ajustable entre un premier composant (A) et un second composant (B) à l'aide d'une unité de réglage (1) selon l'une des revendications 1 à 11.

13. Procédé de réglage d'une position relative entre un second composant (B) monté de façon à pouvoir être déplacé en rapport avec un premier composant (A) disposé fixement, à l'intérieur duquel une ouverture d'installation (D) est prévue, dans lequel une unité de réglage selon l'une des revendications 1 à 11 est utilisée, **caractérisé par** les étapes suivantes :
a) la fixation (I) de la pièce de réception (5) de type douille et du boulon ajustable (3) à l'intérieur de l'ouverture d'installation (D), dans lequel la pièce de réception (5) et le boulon ajustable (3) sont insérés prémontés ou successivement à l'intérieur de l'ouverture d'installation (D),
b) le réglage (III) d'une position de base de la tête excentrique (10) en rapport avec la pièce de réception (5),
c) la mise en place (IV) du second composant (B) avec une nervure ajustable (C) contiguë à la tête excentrique (10) et
d) la rotation (V) de la tête excentrique (10) à l'aide de l'un des deux moyens d'entraînement (14, 46) et le déplacement latéral (VI) ainsi induit du second composant (B) par rapport au premier composant (A).

14. Procédé de réglage selon la revendication 13, avec l'autre étape :
l'enclenchement (II) du boulon ajustable dans la pièce de réception de type douille, de sorte qu'il est maintenu de façon imperdable et rotative.

15. Procédé de réglage selon la revendication 13 ou 14, avec l'autre étape :
le maintien moyennant une liaison par friction de la partie de raccordement dans l'espace libre rond ou ovalisé de la partie axiale cylindrique de la pièce de réception et
la rotation continue ou graduelle du boulon ajustable dans la pièce de réception pour une position axiale constante.

16. Procédé de réglage selon la revendication 15, avec l'autre étape :
la rotation du boulon ajustable à l'aide du moyen d'entraînement opposé à la tête, après la mise en place du second composant (B) avec une nervure ajustable (C) contiguë à la tête excentrique (10).
